# EUROPÄISCHE PATENTANMELDUNG

(11) **EP 4 353 523 A1**
(43) Veröffentlichungstag der Anmeldung: **17.04.2024**
(21) Anmeldenummer: 23199494.8
(22) Anmeldetag: 25.09.2023
(51) Int. Cl.: B60L 53/68

(54) **VERFAHREN UND ANORDNUNG ZUM SCHUTZ EINER LADESTATION VOR MISSBRÄUCHLICHER NUTZUNG**

(30) Priorität: 14.10.2022 DE 102022210895
(71) Anmelder: Siemens Aktiengesellschaft, 80333 München (DE)
(72) Erfinder: Bode, Sebastian, 59229 Ahlen (DE)
(74) Vertreter: Siemens Patent Attorneys

(57) **Zusammenfassung**

Die Erfindung betrifft ein Verfahren zum Schutz einer Ladestation vor missbräuchlicher Nutzung bei dem eine erste Einrichtung, insbesondere ein, beispielsweise zur Vergebührung entnommener Energie installiertes, Messgerät, zumindest zu einem Zeitpunkt Messdaten, eingebettet in eine zumindest die Messdaten beinhaltende erste Nachricht, an zumindest eine zweite, insbesondere einer mit der Ladestation zumindest teilweise steuernd verbundenen und/oder in ihr integrierten, Einrichtung sendet, das Senden derart durchgeführt wird, dass eine von den Messdaten eineindeutig ableitbare Information, beispielsweise eine Kopie der Messdaten, ein Hashcode oder vergleichbare die Prüfung von Inhaltsidentität gewährleistende Ableitung, gebildet und für die erste Einrichtung zugreifbar zumindest temporär gespeichert wird, die Messdaten frei von kryptographischer Sicherung an die zweite Einrichtung versandt werden, die zweite Station bei Empfang der Messdaten ein dem Inhalt der Messdaten eineindeutig zuordenbares erstes Kennzeichen, insbesondere digitalen Signatur, auf Grundlage des Inhalts der Messdaten erzeugt, zumindest das erste Kennzeichen, eingebettet in eine zweite Nachricht, an die erste Einrichtung sendet, die erste Einrichtung bei Empfang des ersten Kennzeichens, die Integrität der übermittelten Messdaten auf Grundlage des empfangenen ersten Kennzeichens und einer Kopie der Messdaten verifiziert, die Durchführung eines zumindest mit dem Ladevorgang korrelierenden Ereignisses abhängig von einem positiven Verifikationsergebnisses erfolgt. Ferner betrifft die Erfindung eine entsprechende Anordnung.

## Beschreibung

Die Erfindung betrifft den Schutz einer Ladestation vor missbräuchlicher Nutzung.

Zur Identifizierung von Kunden in der Elektromobilität werden häufig einfache RFID-Karten eingesetzt. Bekannt ist, diese RFID-Karten gegen Kopieren durch geeignete Kommunikationsprotokolle zwischen Karte und Kartenleser besonders zu schützen.

Im Stand der Technik werden Verfahren gegen das Kopieren und Nachahmen von Identifikationsmerkmalen kontinuierlich weiterentwickelt. Durch die Nutzung aktueller Verfahren kann ein verhältnismäßig hoher Schutz gegen den Gebrauch durch Unberechtigte geschaffen werden. Aus der EP 2 531 368 B1 ist beispielsweise ein Verfahren und eine Vorrichtung zur Zuordnung eines von einer Ladestation erfassten Messewertes zu einem Nutzer bekannt, das sicherstellt, dass Messdaten nur für einen hierfür verantwortlichen Kunden verwendet werden. Ferner ist aus der EP 2 755 846 B1 ein Verfahren und eine Vorrichtung zur Zuordnung eines von einer Ladestation erfassten Messwertes zu einer Transaktion bekannt, bei der ein Freigeben eines Ladestroms bei einem Empfang einer Transaktionskennung in der Ladestation erfolgt, wobei die Transaktionskennung zuvor von einem Nutzer mitgeteilt worden ist. Ein Missbrauch durch Berechtigte kann hingegen nicht ausgeschlossen werden.

Durch die vorliegende Erfindung soll eine Lösung geschaffen werden, die die Nachteile des Standes der Technik überwindet, insbesondere eine mit dem ISO15118 Standard konforme Realisierung des so genannten Plug and Charge, PnC, ermöglicht.

Diese Aufgabe wird durch das Verfahren zum Schutz einer Ladestation vor missbräuchlicher Nutzung gemäß dem Gattungsbegriff des Anspruchs 1 durch dessen Merkmale, durch den computerlesbaren Datenträger gemäß Gattungsbegriff des Anspruchs 8, durch dessen Merkmale, durch das Computerprogrammprodukt gemäß Gattungsbegriff des Anspruchs 9, durch dessen Merkmale, sowie der Anordnung zum Schutz einer Ladestation vor missbräuchlicher Nutzung gemäß dem Gattungsbegriff des Anspruchs 10, durch dessen Merkmale gelöst.

Dass erfindungsgemäße Verfahren zum Schutz einer Ladestation vor missbräuchlicher Nutzung, ist dadurch gekennzeichnet, dass eine erste Einrichtung, insbesondere ein, beispielsweise zur Vergebührung entnommene Energie installiertes, Messgerät, zumindest zu einem Zeitpunkt
a) Messdaten, eingebettet in eine zumindest die Messdaten beinhaltende erste Nachricht, an zumindest eine zweite, insbesondere einer mit der Ladestation zumindest teilweise steuernd verbundenen und/oder in ihr integrierten, Einrichtung sendet,
b) das Senden derart durchgeführt wird, dass
   b1) eine von den Messdaten eineindeutig ableitbare Information, beispielsweise eine Kopie der Messdaten, ein Hashcode oder vergleichbar die Prüfung von Inhaltsidentität gewährleistende Ableitung, gebildet und für die erste Einrichtung zugreifbar zumindest temporär gespeichert wird,
   b2) die Messdaten frei von kryptographischer Sicherung an die zweite Einrichtung versandt werden,
c) die zweite Station bei Empfang der Messdaten
   c1) ein dem Inhalt der Messdaten eineindeutig zuordenbares erstes Kennzeichen, insbesondere digitalen Signatur, auf Grundlage des Inhalts der Messdaten erzeugt,
   c2) zumindest das erste Kennzeichen, insbesondere gemeinsam mit den Messdaten, eingebettet in eine zweite Nachricht, an die erste Einrichtung sendet,
d) die erste Einrichtung bei Empfang des ersten Kennzeichens, die Integrität der übermittelten Messdaten auf Grundlage zumindest eines Teils der in der zweiten Nachricht eingebetteten Inhalte, insbesondere des empfangenen ersten Kennzeichens und/oder der Messdaten mit einer Kopie der Messdaten verifiziert,
e) die Durchführung eines zumindest mit dem Ladevorgang korrelierenden Ereignisses abhängig von einem positiven Verifikationsergebnisses erfolgt.

Ein Vorteil des erfindungsgemäßen Verfahrens liegt darin, dass die Übertragung eines Messwerts ohne kryptografische Sicherung an eine externe Stelle erfolgen kann und somit eine sehr einfache und zugleich standardkonforme Realisierung eines Schutzes vor Missbrauch bietet, der durch Manipulation der Messdaten und/oder anderer vergebührungsrelevanten Daten im Rahmen einer Energieabgabe liegt, bzw. die Integrität dieser Daten in einer einfachen, gesetzliche Regelungen für die Vergebührung von Energieabgabe erfüllenden, Weise sicherstellt.

Die Erfindung erreicht die Vereinfachung auch dadurch, dass für eine Sicherungsfunktion unter anderem in der einfachsten Ausgestaltungsform des erfindungsgemäßen Verfahrens ein ebenfalls sehr einfacher Ansatz bereitgestellt wird. Dieser Ansatz ist dadurch gekennzeichnet, dass die externe Stelle, also zumindest eine zweite Einrichtung, nach Empfang der Messwerte dann den Empfang der Nachricht, die die Messdaten enthält, quittiert und die Quittung, als Kennzeichen zur Prüfung durch die erste Einrichtung zurückübermittelt.

In einer bevorzugten Ausführungsform bringt hierzu die zweite Einrichtung als Kennzeichen eine digitale Signatur, beispielsweise an den Messdatensatz, an und übermittelt den signierten Datensatz an die erste Einrichtung, das beispielsweise durch das im Vorgang des Ladens, also der Energieabgabe, obligatorische Messgerät realisiert ist, zurück. Vorzugsweise wird dort die Integrität durch Abgleich zumindest eines Teils der empfangenen Rücksendung mit einer von den Messdaten eineindeutig abgeleiteten Information, wie einer Kopie der Messdaten oder einem aus den Messdaten gebildeten Hashcode, überprüft.

Für diese Verifizierung führt die Erfindung ihren grundlegenden erfinderischen Ansatz fort bzw. unterstützt ihn, da hierzu lediglich in der ersten Einrichtung eine Kopie bzw. das hieraus abgeleitete Datum vorgehalten werden muss. Das Stattfinden eines mit dem Ladevorgang korrelierenden Ereignisses in Abhängigkeit des Prüfungsergebnisses, bewirkt, dass schließlich diese einfachen Maßnahmen den Schutz des Ladevorgangs vor Manipulation bewirken, da im Falle eines negativen Ergebnisses folgerichtig Ereignisse ausgelöst werden oder unterbleiben können, deren Existenz oder Ausbleiben bewirkt, dass eine Abrechnung auf Basis unverifizierter und potenziell manipulierter Messdaten unterbleibt. Insbesondere kann ein Messgerät in einen Fehlerzustand gehen, in dem die Freigabe einer weiteren Nutzung des Messgeräts bzw. infolge auch der Ladestation ausbleibt.

Dieser Zustand kann im Übrigen unabhängig von der Anzahl von einem Ladungsvorgang benötigenden Nutzer für alle Nutzer so lange erhalten bleiben, bis eine Integritätsprüfung positiv ausfällt und/oder eine Manipulationsbehandlungsprozess eine Fortführung erlaubt, etwa weil die mutmaßliche Manipulation abgewehrt oder auf andere Art geklärt worden ist.

Die erfindungsgemäße Anordnung zum Schutz einer Ladestation vor missbräuchlicher Nutzung, ist gekennzeichnet
a) mit einer ersten Einrichtung, insbesondere ein, beispielsweise zur Vergebührung entnommener Energie installiertes, Messgerät, und
b) mit zumindest einer zweiten, insbesondere einer mit der Ladestation zumindest teilweise steuernd verbundenen und/oder in ihr integrierten, Einrichtung, wobei
c) die erste Einrichtung derart ausgestaltet ist, dass
   c1) zumindest zu einem Zeitpunkt Messdaten, eingebettet in eine zumindest die Messdaten beinhaltende erste Nachricht, an zumindest eine der zweiten Einrichtung sendbar sind,
   c2) eine den Messdaten eineindeutig ableitbare Information, beispielsweise eine Kopie der Messdaten, ein Hashcode oder vergleichbare, zur Prüfung von Inhaltsidentität gewährleistende Ableitung, gebildet und für die erste Einrichtung zugreifbar und zumindest temporär gespeichert wird,
   c3) die Messdaten frei von kryptographischer Sicherung an die zweite Einrichtung versendbar sind,
d) die zweite Station derart ausgestaltet ist, dass
   d1) die Messdaten empfangbar sind,
   d2) bei Empfang der Messdaten ein dem Inhalt der Messdaten eineindeutig zuordenbares erstes Kennzeichen, insbesondere digitalen Signatur, auf Grundlage des Inhalts der Messdaten erzeugbar ist,
   d3) zumindest das erste Kennzeichen, in eine zweite Nachricht einbettbar und an die erste Einrichtung sendbar ist,
   d4) die erste Einrichtung bei Empfang des ersten Kennzeichens, durch die erste Einrichtung die Integrität der übermittelten Messdaten auf Grundlage des empfangenen ersten Kennzeichens und einer Kopie der Messdaten verifizierbar ist,
e) die Durchführung eines zumindest mit dem Ladevorgang korrelierenden Ereignisses abhängig von einem positiven Verifikationsergebnisses ist.

Die erfindungsgemäße Anordnung zum Schutz einer Ladestation vor missbräuchlicher Nutzung zeichnet sich dadurch aus, dass es Mittel zur Durchführung des Verfahrens und/oder einer seiner Ausgestaltungen und Weiterbildungen umfasst.

Hierdurch trägt sie zur Implementierung und mutatis mutandis damit zur Realisierung der im Zusammenhang mit dem Verfahren genannten Vorteile bei.

Weitere vorteilhafte Ausgestaltungen und Weiterbildungen der Erfindung sind durch die Unteransprüche angegeben.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Das erfindungsgemäße Verfahren kann vorteilhafter Weise derart weitergebildet sein, dass als mit der Durchführung korrelierenden Ereignis eine Freigabe des Ladevorgangs, Fortsetzen eines Ladevorgangs, Start eines Vergebührungsvorgangs und/oder Start eines Authentifizierungsvorgangs signalisiert wird.

Wird das Ereignis als Freigabe eines Ladevorgangs ausgestaltet, so kann eine missbräuchliche Nutzung bereits vor Abgabe einer Ladung unterbunden werden. Es kann also gar nicht erst zu, nicht oder verfälscht vergebührten, Ladungsabgaben aufgrund von Manipulation kommen.

Wird dagegen das Ereignis derart weitergebildet, dass ein Fortsetzen eines Ladevorgangs davon abhängt, so kann missbräuchliche Nutzung bei bestehenden Ladevorgängen entsprechend begegnet werden. In einer bevorzugten Form dieser Weiterbildung erfolgt ein Fortsetzen dabei so lange, wie eine Sperrung beinhaltende Nachricht seitens der ersten Einrichtung ausbleibt. Hierdurch wird in der zweiten Einrichtung also ein Ladevorgang gewissermaßen indirekt, durch Ausbleiben einer den Ladevorgang verhindernden Nachricht (Signalisierung), freigegeben. Diese Variante reduziert den Datenverkehr und stellt daher eine weitere Vereinfachung der Umsetzung des erfindungsgemäßen Verfahrens dar. Sie reduziert außerdem die Anzahl übertragener Daten und schont somit Ressourcen. Die Signalisierung kann alternativ oder ergänzend auch insoweit indirekt erfolgen, dass ein Ladevorgang aufgrund der Einwirkung der ersten Einrichtung beendet wird, was durch die zweite Einrichtung festgestellt werden kann. Diese Ausführungsvariante der Weiterbildung ist also insbesondere dann vorteilhaft einsetzbar, wenn die Einrichtung für die Energieabgabe, also die Ladestation, und eine oder mehrere für den Vergebührungsprozess vorgesehenen Einrichtungen separat betrieben werden aber über den Ladevorgang selbst Kenntnis erlangen können. Das Bestehen einer Kommunikationsverbindung mit Übertragungsrichtung von der ersten zur zweiten Einrichtung ist daher nicht erforderlich, sodass das Verfahren auch nicht dadurch gestört werden kann, dass eine bestehende Kommunikationsverbindung unterbrochen wird.

Da ein erfindungsgemäßer Ladevorgang in der Regel eben einer Vergebührung unterworfen ist bzw. mit ihr einhergeht, kann die Ausführung des Ereignisses als Start des Vergebührungsvorgangs ebenso zur Freigabe eines Ladevorgangs genutzt werden, hiermit wird also ein ohnehin erforderliches Signal für das Auslösen zweier Vorgänge, dem Vergebührungs- und dem Ladevorgang, genutzt - was wiederrum die Ressourcen schont und der Einfachheit der Implementierung/Realisierung des erfindungsgemäßen Verfahrens zugute kommt.

Alternativ oder ergänzend kann dies auch zu einem Start und somit auch der Durchführung eines Authentifizierungsvorgangs führen bzw. diesen für die Freigabe nutzen. Diese Kombination hat neben der Ressourcenschonung und Vereinfachung auch den Vorteil, dass ein zusätzlicher den Missbrauch verhindernder Schritt vor der Freigabe einer Ladungsentnahme vollzogen werden muss. Somit wird hierdurch auch die Sicherheit des Verfahrens erhöht.

Die Erfindung kann also durch Kombination einzelner, einiger oder aller dieser Ausgestaltungen vorteilhaft weitergebildet werden.

Bevorzugt kann das erfindungsgemäße Verfahren derart vorteilhaft weitergebildet werden, dass zur Signalisierung der Freigabe des Ladevorgangs die erste Einrichtung bei positivem Verifikationsergebnis
a) ein dem Inhalt des ersten Kennzeichens eineindeutig zuordenbares zweites Kennzeichen, insbesondere digitalen Signatur, auf Grundlage des Inhalts des ersten Kennzeichens erzeugt,
b) das zweite Kennzeichnen, eingebettet in eine dritte Nachricht, an die erste Einrichtung übermittelt,
c) nach Empfang des zweiten Kennzeichens durch die zweite Einrichtung die Freigabe des Ladevorgangs erfolgt.

Hierdurch ist eine den erfinderischen Gedanken der Integritätsprüfung mittels Kennzeichnung übertragener Daten sowie Prüfung auf seitens des Kommunikationspartners fortführende Ausgestaltung gegeben, die den Ladevorgang direkt durch Empfang des zweiten Kennzeichens freigibt.

Eine für ein indirektes Freigeben bevorzugte vorteilhafte Weiterbildung des erfindungsgemäßen Verfahrens ist dann gegeben, wenn zum Fortsetzen eines Ladevorgangs die erste Einrichtung
a) bei negativem Verifikationsergebnis eine ein Sperren eines Ladevorgangs bewirkende dritte Nachricht an die zweite Einrichtung sendet,
b) bei positivem Verifikationsergebnis ein Senden der dritten Nachricht unterbleibt,
c) die zweite Einrichtung bis zum Empfang einer dritten Nachricht einen Ladevorgang fortführt.

Mit dieser Weiterbildung wird ressourcenschonend und einfach das zweite Kennzeichen als negative Rückmeldung genutzt, welches im Idealfall viel weniger Übertragungen zur Folge hat.

Ein weitere vorteilhafte Weiterbildung des erfindungsgemäßen Verfahrens ist dann gegeben, wenn die erste Einrichtung, die erste Nachricht derart bildet, dass neben den Messdaten mindestens eine individuelle Ladevorgänge und/oder individuelle Nutzer zumindest indirekt diskriminierende Information, wie beispielsweise eine Transaktionskennung, insbesondere eine laufende Nummer, eine Messgeräteidentifikation, ein Messgerätestatus, eine Zeitinformationen, eine Datumsinformation, einen öffentlichen Messgeräteschlüssel, einen Zeit-Index, eine Nutzerinformation, eine Zahlungsinformation, eine Verbindungsinformation, eine Tarifinformation und/oder Vergleichbare, eingebettet wird.

Durch diese Weiterbildung wird mindestens eine weitere Möglichkeit zur Erhöhung der Sicherheit geboten, da Ladevorgänge und/oder Nutzern diskriminierende korrelierende Daten jeweils einzeln für sich eine Möglichkeit bieten Zugriffe hinsichtlich ihrer Berechtigung zu überprüfen. Ferner zugleich auch für die Vergebührungszuordnung und/oder andere Schritte innerhalb des Ladevorgangs genutzt werden können, so dass die erfindungsgemäße Ressourcenschonung und Simplifizierung unterstützt wird. Die Aufzählung ist dabei nicht abschließend. Beispielsweise können dabei auch biometrische Daten umfasst sein, die mit durch einen Gesichts- und/oder Fingerabdrucksensor oder Vergleichbarem erfassten Daten abgeglichen werden.

Dieser Vorteile werden ebenfalls erzielt oder intensiviert, wenn das erfindungsgemäße Verfahren alternativ oder ergänzend derart weitergebildet wird, dass die zweite Einrichtung, die zweite Nachricht derart bildet, dass neben dem ersten Kennzeichen mindestens ein individueller Ladevorgang und/oder individuelle Nutzer zumindest indirekt diskriminierende Information, wie beispielsweise eine Transaktionskennung, insbesondere eine laufende Nummer, eine Messgeräteidentifikation, ein Messgerätestatus, eine Zeitinformationen, eine Datumsinformation, einen öffentlichen Messgeräteschlüssel, einen Zeit-Index, eine Nutzerinformation, eine Zahlungsinformation, eine Verbindungsinformation, eine Tarifinformation und/oder Vergleichbare, eingebettet wird.

Vorzugsweise wird das erfindungsgemäße Verfahren derart vorteilhaft weitergebildet, dass das erste Kennzeichen und/oder zweite Kennzeichen als digitale Signatur, insbesondere unter Verwendung von öffentlichen und/oder privaten kryptographischen Schlüsseln, einem Hashtag und/oder vergleichbare mit einer Datenintegrität zumindest korrelierenden Daten gebildet wird.

Bei dem erfindungsgemäßen computerlesbaren Datenträger ist ein Computerprogramm gespeichert, welches das Verfahren nach einem der vorangegangenen Ansprüche ausführt, wenn es in einem Prozessor abgearbeitet wird.

Dadurch, dass auf dem computerlesbaren Datenträger ein Computerprogramm gespeichert ist, welches das Verfahren ausführt, wenn es in einem Prozessor abgearbeitet wird, wird die Realisierung des erfindungsgemäßen Verfahrens und damit die Verwirklichung seiner Vorteile ermöglicht.

Das Gleiche gilt für das Computerprogramm, welches in einem Prozessor abgearbeitet wird und dabei das Verfahren und/oder eines seiner Weiterbildungen ausführt, da durch dessen Speicherung auf dem Datenträger und Abarbeitung des Computerprogramms nach Aufnahme des Datenträgers in einem entsprechenden Gerät, das Verfahren mitsamt seinen Vorteilen durchgeführt und dessen Vorteile realisiert werden können.

Gemäß einer Weiterbildung der erfindungsgemäßen Anordnung ist die zweite Einrichtung als ein Fahrzeug und/oder ein in ein Fahrzeug verbaute Steuereinheit ausgestaltet.

Alternativ oder ergänzend kann die erfindungsgemäße Anordnung derart weitergebildet werden, dass die zweite Einrichtung als eine aus dem so genannten eHighway bekannten Ladevorgängen bekannte Entität, insbesondere als ein Enable Device und/oder eine so genannte On-Bord-Unit, ausgestaltet ist.

Im Folgenden werden Ausführungsbeispiele der Erfindung anhand von Figuren 1 bis 3 näher erläutert. In den Figuren 1 bis 3 sind gleiche oder funktionsgleiche Elemente mit denselben Bezugszeichen versehen, sofern nichts anderes angegeben ist. Es zeigen:
- Fig. 1: schematisch einen beispielhaften Ablauf zum Schutz einer Ladestation vor missbräuchlicher Nutzung, gemäß einem ersten Ausführungsbeispiel des erfindungsgemäßen Verfahrens,
- Fig. 2: schematisch einen beispielhaften Ablauf zum Schutz einer Ladestation vor missbräuchlicher Nutzung, gemäß einem zweiten Ausführungsbeispiel des erfindungsgemäßen Ausführungsbeispiels,
- Fig. 3: schematisch einen beispielhaften Ablauf zum Schutz einer Ladestation vor missbräuchlicher Nutzung, gemäß einem dritten Ausführungsbeispiel des erfindungsgemäßen Ausführungsbeispiels.

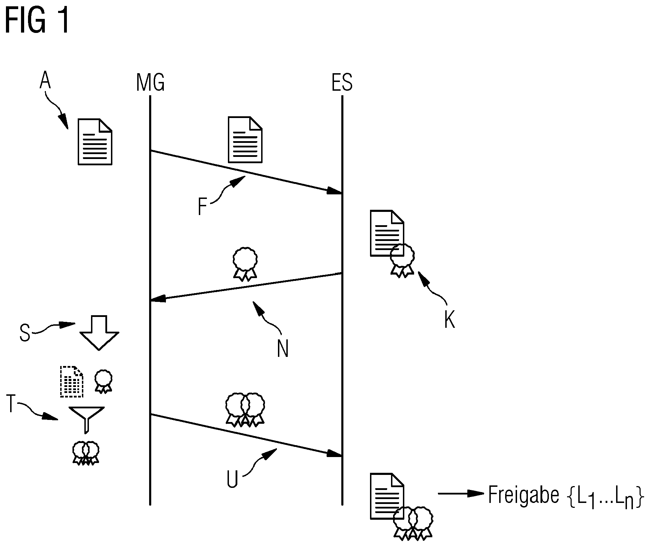

Bei den im Folgenden in den Figuren 1 bis 3 erläuterten Ausführungsbeispielen handelt es sich um bevorzugte Ausführungsformen und Weiterbildungen der Erfindung.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

Figur 1 zeigt schematisch ein Ablaufdiagramm, welches unter anderem anhand der Abfolge eines Datenaustauschs zwischen einem Messgerät MG und einer abrechnungsexternen Stelle LS ein erstes Ausführungsbeispiel des erfindungsgemäßen Verfahrens zum Schutz einer Ladestation vor missbräuchlicher Nutzung zeigt. Bei der externen Stelle kann es sich zwar um die Ladestation selbst handeln, das Ausführungsbeispiel sei aber bei der externen Stelle ES auf eine Abrechnungseinrichtung bzw. -station gerichtet, da einer der Vorteile der Erfindung darin liegt, das eben nicht die Ladestation die externe Stelle ES bilden muss, sondern in der Regel durch andere Entitäten im Rahmen der Energieabgabe über eine Ladestation, insbesondere Einrichtungen der Vergebührungsabwicklung, gegeben sein wird.

Dieses Ausführungsbeispiel zeichnet sich dadurch aus, dass es sowohl betreffend Ausgestaltung des Verfahrens als der Anordnung besonders einfach ausgebildet ist.

In der dargestellten minimalen Ausführung wird in einem ersten Schritt A ein von einem Messgerät MG, welches eine erste Einrichtung darstellt, erfasster Messdatensatz erzeugt.

Bei dem Messdatensatz kann es sich beispielsweise um eine zwischen Fahrzeug und Ladestation übertragene Energiemenge, eine beliebige andere im Zusammenhang mit einer Nutzung einer Ladestation anfallende physikalische Größe, wie beispielsweise die Dauer oder die maximale Leistung und selbstverständlich auch einen Datensatz, welcher mehrere ggf. verschiedene solcher Einzeldaten beinhaltet, handeln.

Dieser Messdatensatz wird in einer gemäß Kommunikationsprotokollen erzeugten und zur Übertragung geeigneten Nachricht in einem zweiten Schritt F an eine externe Stelle, also eine zweite Einrichtung, die beispielsweise als Ladestation ES ausgestaltet ist, übermittelt.

Die Aufgabe dieser externen Stelle ES in einem weiteren Anwendungsfall, bei dem die Erfindung eingesetzt wird, kann beispielsweise darin liegen abrechnungsrelevante Messdaten in einem sich beispielsweise aus einem zwischen Beteiligten vereinbarten Tarif ergebenden Umfang authentisch und integritätsgeschützt bereitzustellen.

Die externe Stelle ES bringt in einem dritten Schritt K eine Signatur an. Vorzugsweise wird hierzu ein Verfahren verwendet, bei dem eine abgetrennte Signatur (detached signature) entsteht. In einem vierten Schritt N übermittelt die externe Stelle ES die Signatur an das Messgerät MG, wobei die Signatur dazu ebenfalls entsprechend eines eingesetzten Kommunikationsprotokolls als eine zweite Nachricht, die zur Übertragung geeignet ist, generiert.

Das Messgerät MG prüft in einem fünften Schritt S die Signatur. D.h. sie ermittelt ob die Signatur an einen lokal verfügbaren Datensatz angebracht werden kann, welcher mit den zuvor an die externe Stelle (LES) übermittelten Messdaten identisch ist - also beispielsweise eine vor bzw. im Rahmen der Übermittlung lokal gespeicherten Kopie der übertragenen Messdaten.

Auf diese Weise kann das Messgerät MG sicherstellen, dass der Messdatensatz unverfälscht bei der externen Stelle angekommen sein muss.

In kurzen Worten kann die Signatur als Verschlüsselung einer Nachricht mit dem privaten Schlüssel eines asymmetrischen Schlüsselpaares beschrieben werden. Durch Anwendung des öffentlichen Schlüssels kann dann die Nachricht zurückgewonnen werden. In der Regel wird gemäß den Ausführungsformen der Erfindung jedoch nicht die Nachricht selbst sondern ein hierüber gebildeter Hashwert verschlüsselt.

Eine Ausnahme ist beispielsweise das in ISO9796-1 definierte Format. Wenngleich dieses Format wegen Sicherheitslücken und generellen Vorbehalten gegen das Auffüllen der Nachricht mit Füllzeichen zum Erreichen einer bestimmten Länge (so genanntes Padding) nicht mehr verwendet werden soll, ist es dennoch ein mögliches Signaturverfahren im Rahmen des hier beschriebenen Verfahrens.

Eine solche Prüfung kann nämlich durchgeführt werden, indem die Zugehörigkeit der Signatur zu einem ebenfalls übermitteltem Datensatz und die Übereinstimmung des übermittelten Datensatzes mit einer beim Messgerät vorliegenden Kopie des Messdatensatzes erfolgt. Weniger ressourcenintensiv ist es indes gemäß Ausführungsbeispiel der Erfindung aus der Signatur durch Anwendung des für die Signaturprüfung vorgesehenen öffentlichen Schlüssels einen Hash zu berechnen und diesem mit einem zuvor mittels kryptologischen Hashverfahrens aus den Messdatensatz gewonnenen Hashwertes abzugleichen, sodass Schritte welche im Rahmen der Signaturprüfung ohnehin notwendig sind und zu einer Einsparung von Speicherplatz führen frühestmöglich durchgeführt werden.

In diesem Verfahrensschritt stellt also das Messgerät fest, ob die Signatur tatsächlich zu den ursprünglich ermittelten Messwerten gehört und deckt mögliche Manipulationen an dem insoweit ungeschützt an die externe Stelle übermittelten Datensatz auf. Die Abbildung zeigt so ein Verfahren mit abgetrennter Signatur, welches die bevorzugte Ausführung ist, ohne dass das Verfahren auf derlei Signaturen eingeschränkt wäre.

Abhängig vom Ergebnis der Prüfung wird in einem sechsten Schritt T ein mit einem Ladevorgang korrelierendes Ereignis ausgeführt. Im dargestellten Ausführungsbeispiel handelt es sich dabei um ES Die Bestätigung der Korrektheit der geprüften digitalen Signatur durch weitere digitale Signatur.

Bei dem dargestellten Ausführungsbeispiel handelt es sich hierbei, um eine bevorzugte Ausführung mit expliziter Bestätigung der Integrität.

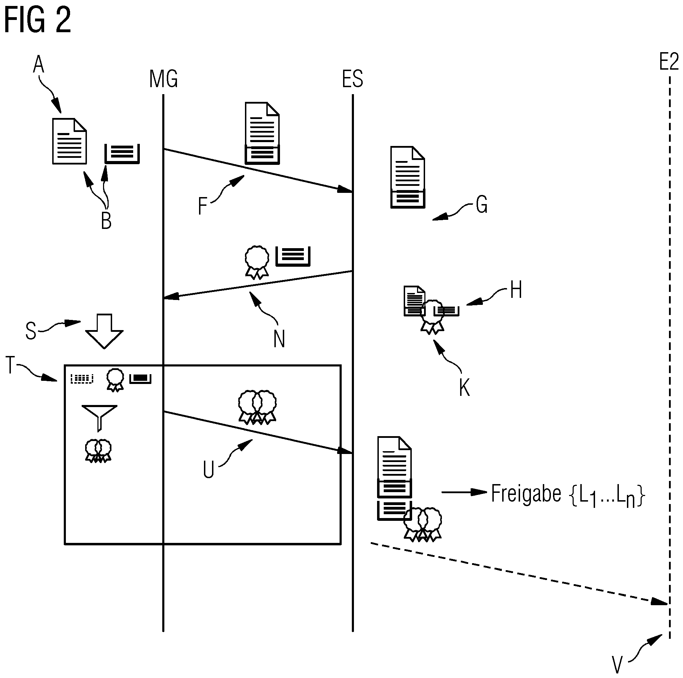

Eine komplexere Ausgestaltung als weiteres Ausführungsbeispiel der Erfindung mit expliziter Bestätigung der Integrität ist in Figur 2 zu sehen.

Es ist zu erkennen, dass in dieser bevorzugten Ausführungsvariante, gegenüber der in Figur 1 erläuterten, minimalen Ausführung nach der Messung, also dem ersten Schritt A, ein zweiter Schritt B durchgeführt wird, bei dem für die zu übertragende erste Nachricht aus dem Messergebnis, also den Messdaten, und weiteren Metadaten, ein Messdatensatz gebildet wird.

In einem dritten Schritt F wird dann dieser gegenüber der minimalen Variante in Figur 1 erweiterte Messdatensatz mit der zur Übertragung gebildeten ersten Nachricht übermittelt.

Für ein solches Metadatum wird beispielsweise eine Transaktionskennung, im einfachsten Fall eine laufende Nummer, eine Messgeräteidentifikation, ein Messgerätestatus, Zeitinformationen, Datumsinformationen, ein öffentlichen Messgeräteschlüssel, ein Zeit-Index, eine Nutzerinformation, eine Zahlungsinformation, eine Verbindungsinformation, eine Tarifinformation oder eine Authentifizierungsinformation, und/oder weitere mit einem, insbesondere nutzerindividualisierten, Ladungsvorgang korrelierenden Daten ermittelt und/oder als Metadatum ermittelt und verwendet.

Die externe Stelle ES prüft dann in einem vierten Schritt G die Metadaten und fügt in einem fünften Schritt H weitere Metadaten hinzu, für die ebenfalls einzelne oder Kombinationen der oben genannten mit einem, insbesondere nutzerindividualisierten, Ladevorgang korrelierende Daten ermittelt und/oder gebildet werden.

In einem sechsten Schritt K wird dann durch die externe Stelle eine zweite Nachricht zur Übermittlung erzeugt. Gemäß Beispiel werden hierzu die im fünften Schritt H gebildeten Metadaten gemeinsam mit einer seitens der externen Stelle ES gebildeten digitalen Signatur verwandt und eine zumindest diese beiden Hinweise beinhaltende zweite Nachricht in einem siebten Schritt an das Messgerät MG übermittelt.

Das Messgerät MG kann dann in einem achten Schritt S die Inhalte der Nachricht prüfen. D.h. die Signatur und/oder die Metadaten werden auf Integrität überprüft.

Gemäß einer Variation dieses Ausführungsbeispiels kann aber auf das Senden der seitens der externen Stelle ES erzeugten Metadaten verzichtet werden und lediglich die digitale Signatur als Teil der zweiten Nachrichten übermittelt werden. Ein Übersenden der seitens der externen Stelle ES erzeugten Metadaten wird in der Regel nur dann erfolgen, wenn sie für die Integritätsprüfung seitens des Messgerätes erforderlich sind, wobei sie im Falle der Übersendung in der Regel als eine weitere Stufe der Integritätsprüfung ausgestaltet sein wird; d.h. hiermit wird eine zusätzliche Hürde zur Abwehr von Manipulationen geschaffen. Die Notwendigkeit ergibt sich dabei insbesondere daraus, welcher Teil der Metadaten bei der Berechnung der Signatur berücksichtigt wurde. Ob sich die Signatur über ein einzelnes Metadatum erstreckt, wird wohl in Abhängigkeit davon festgelegt werden, ob eine unbemerkte Manipulation zu befürchten sein wird. Dies ist sicherlich dann der Fall, wenn abrechnungsrelevante Zusatzinformationen, wie eine Kundenkennung hinzugefügt werden, hingegen nicht der Fall, wenn es sich nur um Hinweise handelt welche von mehreren zulässigen Hashverfahren eingesetzt wurden und somit nur der effizienten Prüfung durch das Messgerät dienen.

Auf die in dem siebten Schritt N an das Messgerät MG übermittelten Daten, wird in einem neunten Schritt T eine Bestätigung durch das Messgerät MG erzeugt und für eine Übertragung mittels einer dritten Nachricht bereitgestellt, wenn das Messgerät in dem zuvor durchgeführten achten Schritt S die Signatur und/oder die Metadaten geprüft und die Integrität der Daten als gegeben festgestellt worden ist. Diese Bestätigung kann als Quittung bzw. Kennzeichen betrachtet werden, das beispielsweise eine Signatur der im Schritt K erzeugten Signatur mit einem privaten Schlüssel sein kann.

Das Messgerät MG kann dann erfindungsgemäß alle, beispielsweise aufgrund eines Bezugs wie der Nutzerindividualisierung, zusammengehörenden Daten zusammenführen, die in die dritte Nachricht eingekapselt werden, so dass in einem zehnten Schritt U die Daten mittels der dritten Nachricht an die externe Stelle ES übermittelt. Hier kann nach Empfang der Quittung mittels Signatur direkt die Freigabe des Ladevorgangs erfolgen.

Die externe Stelle ES kann erfindungsgemäß ebenfalls mehrere, aufgrund eines Bezugs wie der Nutzerindividualisierung, zusammengehörenden Daten zusammenführen

Gemäß einer - gestrichelt dargestellten - Variante kann alternativ oder ergänzend in einem elften Schritt V an einer weiteren zweiten externen Einrichtung E2, endgültig der Inhalt der dritten Nachricht zur Freigabe weitergeleitet und geprüft werden.

Dies kann beispielsweise derart erfolgen, dass zunächst anhand eines in der weiteren zweiten Einrichtung E2 vorhandenen öffentlichen Schlüssels, der mit dem privaten Schlüssel des Messgeräts MG ein Schlüsselpaar bildet, die Signatur auf der Signatur geprüft wird und sodann die Signatur auf dem Messdatensatz, so dass bei positivem Ergebnis, also gegebener Integrität, die Freigabe erfolgt.

Der hierfür benötigte Schlüssel kann ein Metadatum in dem durch die bereits geprüfte Signatur geschützten die weitere Signatur enthaltenden Datensatz sein, insbesondere kann es ein Teil der zuvor hinzugefügten und übermittelten Metadatensätzen sein.

Die Erfindung ist hierauf nicht beschränkt, vielmehr kann eine Diskriminierung auch anhand der beteiligten Einheiten MG, ES und E2 alternativ oder ergänzend zur Diskriminierung basierenden auf individuelle Nutzer erfolgen.

Gemäß einem besonders komplexen und daher nicht dargestellten Ausführungsbeispiel des erfindungsgemäßen Verfahrens wird die Kette der "Indirektionen" beliebig verlängert. Es werden also von ein oder mehreren zusätzlichen nicht dargestellten, also zur dargestellten weiteren zweiten Einrichtung E2, hinzukommenden, zweiten Einrichtungen, diverse Signaturen und/oder Datensätze zu beliebigen Zeitpunkten nach dem Empfang und/oder der Quittierung eines Datensatzes erzeugt, bevor schließlich ein aufgrund der zuvor übertragenen Datensätze/Signaturen erstellter finaler Datensatz in dem neunten Schritt T durch das Messgerät MG signiert wird. Dieser finale Datensatz, weist damit über eine Vielzahl weiterer durch zumindest einen Teil der Einrichtung MG, ES, E2 und den weiteren zweiten Einrichtungen, in Zwischenschritten erzeugten Datensätze eine Verbindung zu dem im ersten Schritt A erzeugten Messwert MG auf.

Der zusätzliche Nutzen einer solchen Umsetzung liegt darin, dass die diversen Stellen dem sich bildenden finalen Datensatz bzw. Gesamtdatensatz, Informationen hinzufügen können, ohne den jeweils in den Zwischenschritten empfangenen Datensatz selbst kennen zu müssen. Hierzu werden zumindest Teile der zuvor genannten Schritte des Ausführungsbeispiels des erfindungsgemäßen Verfahrens beliebig oft bis zum Vorliegen eines zuvor festgelegten Gesamtdatensatzes wiederholt.

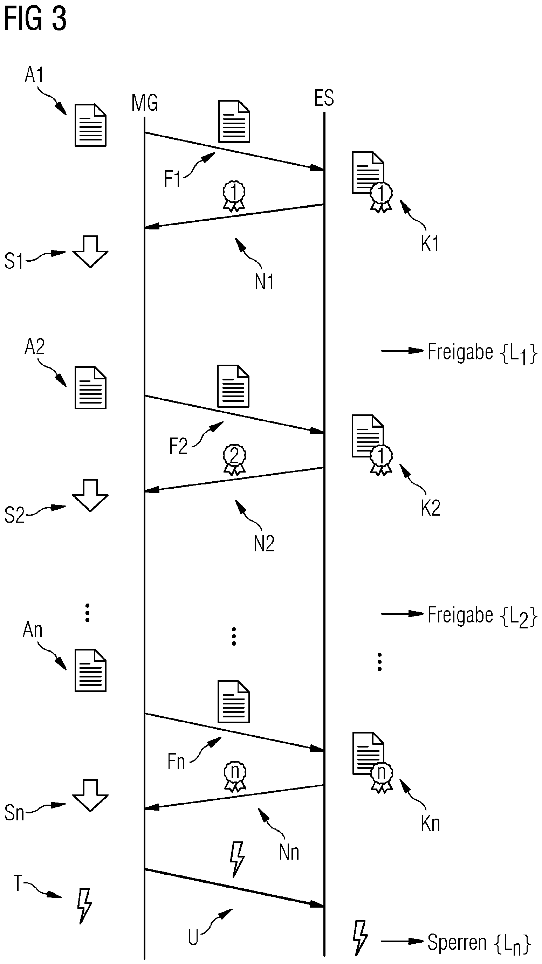

Ein einfacheres Ausführungsbeispiel des erfindungsgemäßen Verfahrens mit impliziter Bestätigung ist in Figur 3 zu sehen.

In der im Zusammenhang mit impliziter Bestätigung bevorzugten Ausführungsform wird ein Messvorgang gestartet und dabei von Beginn an eine Leistung freigegeben.

Wie der Darstellung zu entnehmen ist, wird während einer Ladungsabgabe zu diskreten Zeitpunkten 1...n, also abzugebenden Ladungsteilen L1...Ln, immer wieder als ein erster Schritt A1...An durch das Messgerät MG ein Messdatensatz erzeugt und entsprechend in einem zweiten Schritt F1...n an die externe Stelle ES, also die Abrechnungseinrichtung ES, übermittelt. Hierauf folgt dann zu jedem Zeitpunkt 1...n eine Bestätigung, beispielsweise durch eine digitale Signatur, in einem dritten Schritt K1...n, die zu jedem Zeitpunkt an das Messgerät MG in einem vierten Schritt N1...n zurückübermittelt wird, so dass in einem fünften Schritt S die Integrität geprüft werden kann.

Solange die Überprüfung im jeweiligen Zeitpunkt 1...n die Integrität bestätigt, erfolgt eine Freigabe der Leistung, also die Abnahme der angeforderten, vereinbarten und/oder bereitgestellten Energie L1...L2, im Gegensatz zu den vorstehend beschriebenen Ausführungsbeispielen durch Ausbleiben einer expliziten seitens der externen Stelle ES zu empfangenden zweiten Nachricht zu den Zeitpunkten 1...2 in denen die Integrität gegeben ist. Die Energieabnahme, also das Laden, wird aber unterbrochen, die Energieabgabe also gesperrt, sobald die Prüfung im fünften Schritt Sn fehlschlägt und in einem sechsten Schritt T eine zweite Nachricht erzeugt, in der aber nun im Gegensatz zu den anderen Ausführungsvarianten kein die Energieabnahme zulassende, sondern im Gegenteil, ein die Energieabnahme verhindernder Inhalt eingefügt ist, die schließlich zum Sperren der Abnahme des Ladungsteils Ln führt.

Die Erfindung ist nicht auf die beschriebenen Ausführungsbeispiele des erfindungsgemäßen Verfahrens und der erfindungsgemäßen Anordnungen, die sie ermöglichen, beschränkt. Insbesondere können einzelne Merkmale oder Kombinationen der Ausführungsbeispiele oder Kombinationen davon mit einzelnen Merkmalen der anderen Ausführungsbeispiele oder Kombinationen davon mutatis mutandis alternativ oder ergänzend verbunden werden. Die Erfindung umfasst also alle möglichen Merkmalskombinationen, die unter den Schutzbereich der Ansprüche fallen.

Für alle derartig entstehenden Ausführungsbeispiele gilt unter anderem, dass die externe Stelle ES als ein Fahrzeug oder ein in ein Fahrzeug verbaute Steuereinheit ausgestaltet sein kann.

Ferner gilt, dass die externen Stellen alternativ oder ergänzend als ein so genanntes "Enable Device" oder eine so genannte "On-Bord-Unit", wie sie aus dem Bereich des so genannten "eHighway" bekannt ist, ausgestaltet sein können.

Weiterhin gilt, dass die externen Stellen alternativ oder ergänzend als weitere Ladestation oder als Verwaltungssystem (engl. Charging Station Management Systems (CSMS)), ausgestaltet sein können.

Es gilt auch, dass diese Ausführungsbeispiele einzeln oder in Kombination in der Regel Ausgestaltungen von Erfindungsmerkmalen des erfindungsgemäßen Verfahrens und der sie durchführenden Anordnung umfassen, die darauf abzielen eine Lösung anzugeben, die den Schutz vor missbräuchlicher Nutzung zu vereinfachen.

Zu diesen Merkmalen zählen unter anderem, dass
a) die Übertragung eines durch das Messgerät MG ermittelten Messwerts als Datensatz ohne kryptografische Sicherung an eine externe Stelle, beispielsweise die Abrechnungseinrichtung ES, erfolgt,
b) die externe Stelle ES die den Empfang der Nachricht quittiert und die Quittung zur Prüfung zurückübermittelt,
c) die externe Stelle ES hierzu beispielsweise eine digitale Signatur anbringt und den signierten Datensatz an das Messgerät MG übermittelt,
d) das Messgerät MG die Integrität der Signatur prüft, indem der Bezug der Signatur auf eine zwischengespeicherte Kopie des Datensatzes bzw. ein hieraus abgeleitetes Kennzeichen geprüft wird.
e) die Integrität und somit die Übereinstimmung der tatsächlich signierten Daten mit den ursprünglich erfassten Daten sodann implizit oder explizit bestätigt wird, wobei
f) eine explizite Bestätigung beispielsweise durch Signatur der Signatur erfolgen kann und wobei
g) die implizite Bestätigung dadurch geschehen kann, dass eine Abweichung protokolliert wird, eine Fehlermeldung gesendet oder eine Betriebsart geändert wird, wozu auch das Einstellen des Betriebs gehört.

## Patentansprüche

1. Verfahren zum Schutz einer Ladestation vor missbräuchlicher Nutzung, bei dem eine erste Einrichtung, insbesondere ein, beispielsweise zur Vergebührung entnommener Energie installiertes, Messgerät, zumindest zu einem Zeitpunkt
a) Messdaten, eingebettet in eine zumindest die Messdaten beinhaltende erste Nachricht, an zumindest eine zweite, insbesondere einer mit der Ladestation zumindest teilweise steuernd verbundenen und/oder in ihr integrierten, Einrichtung sendet,
b) das Senden derart durchgeführt wird, dass
b1) eine den Messdaten eineindeutig ableitbare Information, beispielsweise eine Kopie der Messdaten, ein Hashcode oder vergleichbare die Prüfung von Inhaltsidentität gewährleistende Ableitung, gebildet und für die erste Einrichtung zugreifbar zumindest temporär gespeichert wird,
b2) die Messdaten frei von kryptographischer Sicherung an die zweite Einrichtung versandt werden,
c) die zweite Station bei Empfang der Messdaten
c1) ein dem Inhalt der Messdaten eineindeutig zuordenbares erstes Kennzeichen, insbesondere digitalen Signatur, auf Grundlage des Inhalts der Messdaten erzeugt,
c2) zumindest das erste Kennzeichen, eingebettet in eine zweite Nachricht, an die erste Einrichtung sendet,
d) die erste Einrichtung bei Empfang des ersten Kennzeichens, die Integrität der übermittelten Messdaten auf Grundlage des empfangenen ersten Kennzeichens und einer Kopie der Messdaten verifiziert,
e) die Durchführung eines zumindest mit dem Ladevorgang korrelierenden Ereignisses abhängig von einem positiven Verifikationsergebnisses erfolgt.

2. Verfahren nach dem vorhergehenden Anspruch,
**dadurch gekennzeichnet, dass**
als mit der Durchführung korrelierendes Ereignis eine Freigabe des Ladevorgangs, Fortsetzen eines Ladevorgangs, Start eines Vergebührungsvorgangs und/oder Start eines Authentifizierungsvorgangs signalisiert wird.

3. Verfahren nach dem vorhergehenden Anspruch,
**dadurch gekennzeichnet, dass**
zur Signalisierung der Freigabe des Ladevorgangs die erste Einrichtung bei positivem Verifikationsergebnis
a) ein dem Inhalt des ersten Kennzeichens eineindeutig zuordenbares zweites Kennzeichen, insbesondere digitalen Signatur, auf Grundlage des Inhalts des ersten Kennzeichens erzeugt,
b) das zweite Kennzeichnen, eingebettet in eine dritte Nachricht, an die erste Einrichtung übermittelt,
c) nach Empfang des zweiten Kennzeichens durch die zweite Einrichtung die Freigabe des Ladevorgangs erfolgt.

4. Verfahren nach einem der Ansprüche 1 bis 3,
**dadurch gekennzeichnet, dass**
zum Fortsetzen eines Ladevorgangs die erste Einrichtung
a) bei negativem Verifikationsergebnis eine ein Sperren eines Ladevorgangs bewirkende dritte Nachricht an die zweite Einrichtung sendet,
b) bei positivem Verifikationsergebnis ein Senden der dritten Nachricht unterbleibt,
c) die zweite Einrichtung bis zum Empfang einer dritten Nachricht einen Ladevorgang fortführt.

5. Verfahren nach einem der vorhergehenden Ansprüche,
**dadurch gekennzeichnet, dass**
die erste Einrichtung, die erste Nachricht derart bildet, dass neben den Messdaten mindestens eine individuelle Ladevorgänge und/oder individuelle Nutzer zumindest indirekt diskriminierende Information, wie beispielsweise eine Transaktionskennung, insbesondere eine laufende Nummer, eine Messgeräteidentifikation, ein Messgerätestatus, eine Zeitinformationen, eine Datumsinformation, einen öffentlichen Messgeräteschlüssel, einen Zeit-Index, eine Nutzerinformation, eine Zahlungsinformation, eine Verbindungsinformation, eine Tarifinformation und/oder Vergleichbare, eingebettet wird.

6. Verfahren nach einem der vorhergehenden Ansprüche,
**dadurch gekennzeichnet, dass**
die zweite Einrichtung, die zweite Nachricht derart bildet, dass neben dem ersten Kennzeichen mindestens eine individuelle Ladevorgänge und/oder individuelle Nutzer zumindest indirekt diskriminierende Information, wie beispielsweise eine Transaktionskennung, insbesondere eine laufende Nummer, eine Messgeräteidentifikation, ein Messgerätestatus, eine Zeitinformationen, eine Datumsinformation, einen öffentlichen Messgeräteschlüssel, einen Zeit-Index, eine Nutzerinformation, eine Zahlungsinformation, eine Verbindungsinformation, eine Tarifinformation und/oder Vergleichbare, eingebettet wird.

7. Verfahren nach einem der vorhergehenden Ansprüche,
**dadurch gekennzeichnet, dass**
das erste Kennzeichen und/oder zweite Kennzeichen als digitale Signatur, insbesondere unter Verwendung von öffentlichen und/oder privaten kryptographischen Schlüsseln, einem Hashtag und/oder vergleichbare mit einer Datenintegrität zumindest korrelierenden Daten gebildet wird.

8. Computerlesbarer Datenträger,
auf dem ein Computerprogramm gespeichert ist, welches das Verfahren nach einem der vorangegangenen Ansprüche ausführt, wenn es in einem Prozessor abgearbeitet wird.

9. Computerprogramm,
welches in einem Prozessor abgearbeitet wird und dabei das Verfahren nach einem der Ansprüche 1 bis 8 ausführt.

10. Anordnung zum Schutz einer Ladestation (LS) vor missbräuchlicher Nutzung,
a) mit einer ersten Einrichtung, insbesondere ein, beispielsweise zur Vergebührung entnommener Energie installiertes, Messgerät, und
b) mit zumindest einer zweiten, insbesondere einer mit der Ladestation zumindest teilweise steuernd verbundenen und/oder in ihr integrierten, Einrichtung, wobei
c) die erste Einrichtung derart ausgestaltet ist, dass
c1) zumindest zu einem Zeitpunkt Messdaten, eingebettet in eine zumindest die Messdaten beinhaltende erste Nachricht, an zumindest eine der zweiten Einrichtung sendbar sind,
c2) eine Kopie der Messdaten für die erste Einrichtung zugreifbar zumindest temporär speicherbar ist,
c3) die Messdaten frei von kryptographischer Sicherung an die zweite Einrichtung versendbar sind,
d) die zweite Station derart ausgestaltet ist, dass
d1) die Messdaten empfangbar sind,
d2) bei Empfang der Messdaten ein dem Inhalt der Messdaten ein eindeutig zuordenbares erstes Kennzeichen, insbesondere einer digitalen Signatur, auf Grundlage des Inhalts der Messdaten erzeugbar ist,
d3) zumindest das erste Kennzeichen, in eine zweite Nachricht einbettbar und an die erste Einrichtung sendbar ist,
d4) die erste Einrichtung bei Empfang des ersten Kennzeichens, durch die erste Einrichtung die Integrität der übermittelten Messdaten auf Grundlage des empfangenen ersten Kennzeichens und einer Kopie der Messdaten verifizierbar ist,
e) die Durchführung eines zumindest mit dem Ladevorgang korrelierenden Ereignisses abhängig von einem positiven Verifikationsergebnisses ist.
